# EUROPEAN PATENT SPECIFICATION

(11) **EP 1 229 977 B1**
(45) Date of publication and mention of the grant of the patent: **15.03.2006**
(21) Application number: 00966902.9
(22) Date of filing: 27.09.2000
(51) Int. Cl.: B01D 15/00

(54) **POLYAMIDE-CONTAINING LIGANDS COVALENTLY BONDED TO SUPPORTS, POLYAMIDE-CONTAINING RESINS, AND METHODS FOR REMOVING METALS FROM SOLUTIONS**
POLYAMID ENTHALTENDE UND COVALENT AN EINEN TRÄGER GEBUNDENE LIGANDEN, POLYAMID ENTHALTENDE HARZE UND VERFAHREN ZUR ENTFERNUNG VON METALLEN AUS LÖSUNGEN
LIGANDS A BASE DE POLYAMIDE A LIAISON COVALENTE AVEC DES SUPPORTS, RESINES A BASE DE POLYAMIDE, ET PROCEDES RELATIFS A L'ELIMINATION DE METAUX DANS DES SOLUTIONS

(30) Priority: 27.09.1999 US 406256; 22.11.1999 US 444114
(43) Date of publication of application: 14.08.2002
(73) Proprietor: IBC ADVANCED TECHNOLOGIES, INC., American Fork, UT 84003 (US)
(72) Inventor: BRUENING, Ronald, L., American Fork, UT 84003 (US); KRAKOWIAK, Krzysztof, E., Provo, UT 84604 (US)
(74) Representative: Thomson, Paul Anthony
(86) International application number: PCT/US2000/026435
(87) International publication number: WO 2001/023067

(56) References cited:
- WO-A-87/06586
- US-A- 5 078 978
- US-A- 5 096 946
- BALKENHOHL F ET AL: "COMBINATORIAL SYNTHESIS OF SMALL ORGANIC MOLECULES" ANGEWANDTE CHEMIE. INTERNATIONAL EDITION, VERLAG CHEMIE. WEINHEIM, DE, vol. 35, no. 20, 1996, pages 2288-2237, XP002065423 ISSN: 0570-0833
- CUNY G D ET AL: "Ring Opening Cross-Metathesis on Solid Support" TETRAHEDRON LETTERS, ELSEVIER SCIENCE PUBLISHERS, AMSTERDAM, NL, vol. 38, no. 30, 28 July 1997 (1997-07-28), pages 5237-5240, XP004083287 ISSN: 0040-4039

## Description

### FIELD OF THE INVENTION

The present invention relates to polyamide-containing ligands covalently bonded to inorganic and organic solid supports and polyamide-containing polymeric resins. Methods of using such compositions for removing, separating and concentrating certain desired metal ions from solutions are also disclosed, even when the desired ions are in the presence of other metal ions and/or hydrogen ions at much higher concentrations.

### BACKGROUND OF THE INVENTION

Effective methods for the separation and recovery of particular ions such as the transition, post-transition and alkaline earth metal ions from solution mixtures containing these and other metal ions are of great importance in modem technology. Particularly, it is difficult to separate and recover certain metal ions such as Cd²⁺, Pb²⁺, Ag⁺, Ni²⁺, Co²⁺, Fe³⁺, Cu²⁺, Sr²⁺, and/or Ca²⁺ from the presence of even moderate amounts of hydrogen ion (H⁺). It is also very difficult to remove the mentioned desired metal ions when present at low concentrations in solutions that contain other, non-desirable metal ions at much greater concentrations. Thus, there is a real need for a composition of matter and an associated method that may be used for selectively separating certain transition, post-transition, and alkaline earth metal ions from other non-desirable ions.

It is known that ethylenediaminetetraacetamide (EDTAA), diethylenetriaminepentaacetamide (DTPAA), and nitrilotriacetamide (NTAA) form strong complexes with various metal ions in solution. These molecules may be shown as Formulas 1 - 3 respectively below: 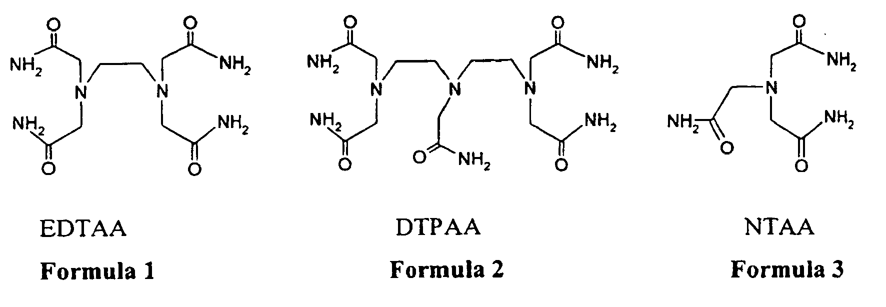 J.M. Grana-Molares, C. Baluja-Santos, A. Alvarez-Devesa and F. Bermejo-Martinez, Etude Spectrophotometrique des Complexes du Cobalt(III) avec les Amides de l'EDTA et du DTPA, Analysis, Volume 7, 249-252 (1979) (report on the synthesis of EDTAA and DTPAA and their ability to complex Co(III) as shown by a spectrophotometric technique). In a different study, L. Przyborowski showed that NTAA and EDTAA could be prepared by modifying known methods and that Cu(II) formed strong complexes with NTAA. L. Przyborowski, Complex Compounds of Amides and Thioamides of Aminopolycarboxylic Acids, Part III. Synthesis, Properties and Copper(II) Complexes of Nitrilotriacetotriamide and Ethylenediaminetetraacetotetraamide, Roczniki Chemii, Volume 44, 1883-1893 (1970).

More recently, a great deal of research has been done in the synthesis and metal ion complexation properties of polyamide-containing azacrown ethers such as those containing acetamide, propionamide, and peptide side arms. R. Kataky, K.E. Matthes, P.E. Nicholson, D. Parker and H-J. Buschmann, Synthesis and Binding Properties of Amide-Functionalized Polyazamacrocycles, Journal of the Chemical Society, Perkin Transactions 2, 1425-1432 (1990) (reported on the synthesis and complexation properties of per-N-(dimethylacetamido)- substituted triaza-9-crown-3, aza-12-crown-4, diaza-12-crown-4, and tetraaza-12-crown-4). The ligating agents 1,4,7,10-tetrakis(N,N-dimethylacetamido)-1,4,7,10-tetraazacyclododecane and 1,7-dioxo-4,10-bis(N,N-dimethylacetamido)-4,10-diazacyclododecane are two chemical structures that were synthesized and which are representative of polyamide-containing ligating agents of the present invention. These ligating agents are shown respectively below in Formulas 4 and 5:

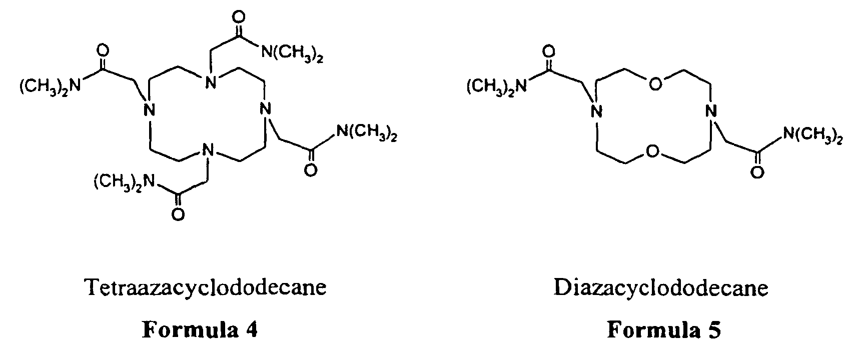

The diamide of Formula 5 was shown to form complexes with all of the alkali metal and alkaline earth metal cations. Further, this diamide was shown to have significant selectivity for Ca²⁺ over the other cations studied. However, a diamide similar to that of Formula 5, but containing one more methylene group in each amide-containing arm (thus, having two N,N-dimethylpropioamido substituents), was shown to form weaker complexes with these same metal ions.

Further studies of amide ligands such as those depicted by formulas 4 and 5 have concluded that the size of the metal ion-ligand chelate ring determines the strength of the interaction between the ligand and the metal ions. For example, a five-membered ring favored the smaller cations over a six-membered ring. Representative of fully chelated metals (Me) having five- and six-membered amide rings attached are shown in Formulas 6 and 7 respectively below: 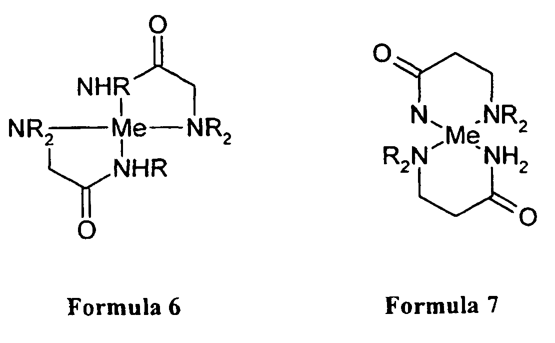 H. Maumela. R. D. Hancock, L. Carlton, and J. H. Reibenspies and K. P. Wainwright, The Amide Oxygen as a Donor Group. Metal Ion Complexing Properties of Tetra-N-Acetamide Substituted Cyclen: A Crystallographic. NMR, Molecular Mechanics and Thermodynamic Study, Journal of the American Chemical Society, Volume 117, 6698-6707 (1995). Further, in this article, the authors reported the synthesis of 1,4,7,10-tetraazacyclododecane (DOTAM) which is the unsubstituted amide analogue of the tetraamide of Formula 4. DOTAM is capable of forming complexes with a host of metal ions including many transition and post-transition metal ions. DOTAM also forms strong complexes with Cd²⁺ and Pb²⁺, even at pH levels as low as 0.3 which is 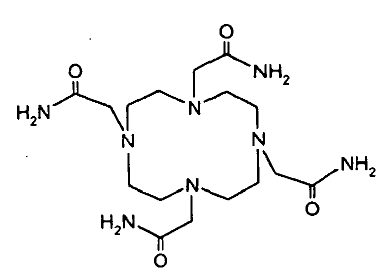 equivalent to a hydrogen ion concentration of 0.5 Molar. DOTAM may be represented by Formula 8 below:

DOTAM **Formula 8**

The articles cited above disclose procedures for synthesizing and demonstrating limited useful complexation properties of polyamide-containing ligand molecules. However, researchers have not previously been able to incorporate polyamide-containing ligands into solid phase separation systems. This is significant because these polyamide-containing ligands merely act as a solute in solution by complexing with selected ions, but provide no effective means for ion separation.

The use of polymeric resins *per se* for selective removal of ions is not a new concept of itself. In U.S. Patent No. 5,656,702, the use of poly(hydroxyarylene) polymeric resins is disclosed for removing alkali metals, particularly cesium, from industrial streams. Additionally, the use of ligands bonded to solid supports is also not a new concept. Various ligands have been bonded to solid supports for both chromatographic and non-chromatographic separation systems. However, never before have polyamide ligand-containing polymeric resins or polyamide ligand ligands bonded to solid supports been successfully synthesized that can be used in a solid phase separation system to concentrate and remove desired metal ions such as members selected from the group consisting of Cd²⁺ Pb²⁺, Ag⁺, Ni²⁺, Co²⁺, Fe³⁺, Cu²⁺, Sr²⁺, and/or Ca²⁺ from source solutions. Therefore, it would be useful to provide such compositions and associated methods for separating these and other desired Metal ions.

The present invention relates to a composition as defined in claim 1 and a method as delivered in claim 11.

### SUMMARY OF THE INVENTION

The present invention is drawn to novel porous and/or non-porous particulate organic and/or inorganic solid supports covalently bonded to polyamide-containing ligands. When an inorganic solid support is used, the solid support is bonded to the polyamide-containing ligand through a covalent linkage mechanism and a hydrophilic spacer grouping. When the particulate solid support is an organic resin or polymer, such as a polyacrylate bead, the polyamide-containing ligand may be bonded directly to an activated polar group on the polymer through a covalent linkage mechanism. A unique composition of matter of this invention comprises polyamide-containing ligands having three or more amide groups (NHC(O)CH₂), two or more amine nitrogens separated by at least two carbons and at least one solid support linkage.

The invention is also drawn to the concentration and removal of certain desired divalent metal ions including transition, post-transition, and alkaline earth metal ions. The present invention is particularly useful for removing such ions as Cd²⁺, Pb²⁺, Ag⁺, Ni²⁺, Co²⁺, Fe³⁺, Cu²⁺, Sr²⁺, and/or Ca²⁺ from source solutions. This is true whether the desired ions are present at very low or very high concentrations, i.e., from ppb to g/l.

The concentration of desired ions is accomplished by forming a complex of desired ions with a polyamide-containing ligand covalently bound to a solid support material or a polyamide-containing polymeric resin by flowing a source solution containing the desired ions through a column packed with polyamide-containing ligand bound solid support material or through a column packed with polyamide-containing polymeric resin material. This process enables the desired ions to complex with the polyamide-containing ligand portion of either composition type disclosed herein. The metal ion and the polyamide-containing ligand are then decoupled by flowing a receiving liquid through the column (in much smaller volume than the volume of source solution passed through the column) to remove and concentrate the desired ions in the receiving liquid solution. The receiving liquid or recovery solution forms a stronger complex with the desired ions than does the polyamide-containing ligand, or alternatively, temporarily forms a stronger interaction with the polyamide-containing ligand than does the desired metal ions. In either case, the desired metal ions are quantitatively stripped from the ligand in a concentrated form in the receiving solution. The recovery of desired ions from the receiving liquid may be accomplished by various methods commonly known in the art including evaporation, electrowinning, and precipitation among others.

### DETAILED DESCRIPTION OF THE INVENTION

A composition of the present invention comprises polyamide-containing ligands that are covalently bonded to an inorganic or organic solid support through a spacer and are represented by Formula 9 as follows:

SS-A-X-L **Formula 9**

wherein SS is a solid support, A is a covalent linkage mechanism, X is a hydrophilic spacer grouping, and L is a polyamide-containing ligand.

The SS-A-X- portion of Formula 9 is well known for use with ion binding ligands. Preferably, the solid support (SS) is an inorganic and/or organic particulate support material selected from the group consisting of silica, silica gel, silicates, zirconia, titania, alumina, nickel oxide, glass beads, phenolic resins, polystyrenes, and polyacrylates. However, other organic resins or any other hydrophilic organic and/or inorganic support materials meeting the above criteria can also be used.

The use of organic ion binding ligands attached to an SS-A-X- solid support by means of a covalent linkage spacer grouping is illustrated in U.S. Patents 4,943,375; 4,952,321; 4,959,153; 4,960,882; 5,039,419; 5,071,819; 5,078,978; 5.084,430; 5,173.470; 5,179.213; 5,182,251; 5,190,661; 5.244,856; 5,273,660; and 5,393,892. These patents disclose various spacers that can be used in forming an organic ligand attached to a solid support.

When the solid support (SS) is an inorganic material such as silica, silica gel, silicates, zirconin, titania, alumina, nickel oxide, or glass beads, the covalent linkage (A) is a silane such that A-X may be represented by Fonnula 10 as follows: 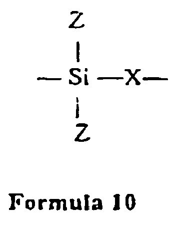
where each Z is independently selected from the group consisting of Cl, Br, 1, lower alkyl, lower alkoxy, substituted lower alkyl or substituted lower alkoxy and S (as used herein, lower alkyl or lower alkoxy means a group having 1 to 8 carbon atoms); and X is a spacer grouping represented by Formula 11 as follows:

(CH₂)ₐ[OCH₂CHR¹CH₂]_{b} **Formula 11**

wherein R¹ is a member selected from the group consisting of H, SH, OH, lower alkyl, and aryl; a is an integer from 2 to about 10; and b is 0 or 1. In Formula 11, the terminal carbon (or -CH₂- group most distal to the solid support) may attach to the polyamide-containing ligand by any suitable bond. However, it is preferred that the terminal carbon on the spacer be covalently bonded to a nitrogen or another carbon present on the ligand.

Often, the terminal carbon on the spacer (X) will bond to either the carbon or the nitrogen found on an amide group of the polyamide-containing ligand. For example, if the ligand has 4 amide groups, one may be used to attach the ligand to the spacer (X) leaving 3 amide groups available for complexing desired ions. If the terminal carbon on the spacer (X) is to bond to an amide group of the ligand (L), Formula 12 below is representative of such an amide group:

(NH)ₘ(CH₂)ₙC(O)(NH)ₙ(CH₂)ₘ **Formula 12**

where m is 0 or 1; and n is 0 or 1 with the proviso that when m is 1, n is 0 and when m is 0, n is 1. Thus, the terminal carbon can either covalently bond to a nitrogen or a carbon atom of the amide group.

Conversely, the spacer (X) does not have to bond to an amide group at all. In some embodiments, the spacer (X) bonds directly to a nitrogen or carbon atom or other appropriate atom that is not part of an amide group. In other embodiments, the SS-A-X- portion will attach to the polyamide-containing ligand by replacing one of the amide groups. Therefore, the attachment of the spacer (X) to the polyamide-containing ligand (L) should be limited only by functionality.

When the particulate solid support (SS) is an organic resin or polymer, such as phenolic resins, polystyrenes, and polyacrylates, it will generally be a hydrophilic polymer or polymer derivatized to have a hydrophilic surface and contain polar functional groups. The polyamide-containing ligand (L) will then generally contain a functional grouping reactive with an activated polar group on the polymer. The covalent linkage (A) and the spacer (X) will then be integrated, and may actually be a single linkage, formed by the reaction between the activated polar group from the polymer and the functional group from the ligand and may be represented by Formula 13 below:

-(CH₂)ₓ-(Y)_{y}-(CH₂)_{z}- **Formula 13**

where x is 0 or 1; y and z are independently 0 or an integer from 1 to 10; and Y is a functional group or aromatic linkage such as an ether (O), sulfide (S), imine (C=N), carbonyl (CO), ester (COO), thioester (CSO), amide (CONH), thioamide (CSNH), amine (NH), lower alkylamine (NR), sulfoxide (SO), sulfone (SO₂) sulfonamide (SO₂NH) phenyl (C₆H₄), benzyl (CH₂C₆h₄), and the like. At least one of x, y or z must be 1.

The polyamide-containing ligand (L) of the present invention is meant to include any ligand having three or more functional amide groups (NHC(O)CH₂) capable of complexing with the desired metal ions and two or more amine nitrogens separated by at least two carbons. Representative examples of polyamide-containing ligands that have at least three amide groups and two or more amine nitrogens separated by at least two carbons include: ethylene bis(oxyethylenenitrilo)tetraacetic acid (EGTAM), diaza-18-crown-6-tetraamide, ethylenediaminetetraacetamide-N-methylenepropanetetraamine (EDTAAMT), tris(2-aminoethyl)amine pentaamide (TRENPAM), and diethylenetriaminepentaacetamide (DTPAM). This list is intended only to be representative of the possible ligands that may be used, the limiting factor being the presence of at least three amide groups and at least two amine nitrogens separated by two or more carbons. Further variations of these ligands may also be used. For example, tris(2-aminoethyl)amine pentaamide (TRENPAM) may be alkyl or aryl substituted as illustrated in Examples 4B (dimethyl substituted) and 4C (phenyl substituted) respectively.

It is to be emphasized that the present invention does not reside in the discovery of the SS-A-X- portion of Formula 9. Rather, it is the discovery that the ion-binding and separation capabilities of the polyamide-containing ligand, when attached to an SS-A-X based solid substrates, are optimized. As summarized above, the present invention is drawn to a novel composition of matter comprising polyamide-containing ligand molecules covalently bound to solid support materials to form the compounds of Formula 9. However, the invention is also drawn to alternative compositions as described below.

In an alternative embodiment, the polyamide ligand-containing polymeric resins of the present invention are a reaction product of a polyamide ligand and formaldehyde or other suitable compound capable of forming a hydroxymethylated polyamide ligand. The hydroxymethylated polyamide ligand is then polymerized using a polymerization and/or crosslinking agent to form the polyamide ligand-containing polymeric resins. The polyamide ligand-containing polymeric resins of the present invention are comprised of from 10 to 50,000 polyamide ligand units wherein each polyamide ligand unit or monomer is defined by three or more amide groups, preferably from three to eight amide groups, as well as two or more amine nitrogen donor atoms separated by at least two carbons. Each amide group of the polyamide ligand unit, after hydroxymethylation, may remain hydroxymethylated or be polymerized and/or crosslinked to other polyamide ligand units through a polymerization agent or a crosslinking agent. At least one of the amide groups of the resin must be polymerized or crosslinked, preferably from two to eight.

The structure of the present invention may be represented generally by Formula 14 as follows:

(LXₘ)ₙ **Formula 14**

wherein L represents the polyamide-containing ligand having three or more amide groups; preferably from three to eight amide groups, and two or more amine nitrogens separated by at least two carbons, n may be an integer from about 10 to 50,000, m is at least three, preferably from three to eight, and X may be CH₂OH, CH₂O-, CH₂-, a crosslinking agent, or a resulting group from polymerization with the proviso that each X group is bonded individually to L and at least one X group per polyamide ligand unit is involved in the polymerization or crosslinking.

Amide groups of the ligand which remain hydroxymethylated after polymerization are free to bind with the desired metal ions according to the present invention. However, the amide groups of the ligand which are involved in the polymerization reaction or crosslinking may also be involved in the binding of the desired metal ions. In other words, it is not the purpose of the invention to describe specifically how each of the polymeric resins complex with each specific desired ion, only that the polymeric resins described herein will bind with the desired ions in various separation systems including non-chromatographic separation systems.

It is to be noted that the crosslinking agents or polymerization agents that may be used and the processes of crosslinking and/or polymerization are known in the art. For example, phenols, resorcinol, fluoroglucinol, aromatic or aliphatic amines, pyrroles, indoles, nitrates, esters, ketones, and nitriles, and/or other known crosslinking agents may be used. Further, polymerization agents that may be used include bisaldehydes, polyaldehydes, dihalogens, polyhalogens, dihalogens of diacids, polyhalogens of polyacids, diesters, polyesters, anhydrides of acids, diepoxides, polyepoxides, and/or other known polymerization agents.

In one preferred embodiment, a hydroxymethylated polyamide ligand may be polymerized linearly using a polymerization agent. In a second preferred embodiment, the generally linear polymer described above may be crosslinked using a crosslinking agent. In another preferred embodiment, a hydroxymethylated polyamide ligand may be both polymerized and crosslinked using only a single polymerization/crosslinking agent. As such, one skilled in the art may utilize these known polymerization agents and crosslinking agents in any functional combination and not depart from the scope of the present invention.

Representative examples of polyamide ligands (L) that may be hydroxymethylated and then polymerized to form polyamide ligand-containing polymeric resins that have at least three amide groups and two or more amine nitrogens separated by at least two carbons include: ethylenebis(oxyethylenenitrilo) tetraacetic acid (EGTAM), diaza-18-crown-6-tetraamide, ethylenediaminetetraacetamide-N-methylenepropanetetraamine (EDTAAMT), tris(2-aminoethyl)amine pentaamide (TRENPAM), and diethylenetriaminepentaacetamide (DTPAM). This list is intended only to be representative of the possible ligands that may be used, the limiting factor being the presence of at least three amide groups, preferably from three to eight amide groups, and at least two amine nitrogens separated by two or more carbons. Further variations of these ligands may also be used. For example, tris(2-aminoethyl)amine pentaamide (TRENPAM) may be alkyl or aryl substituted. Once polymerized, the polyamide-ligand units of the present invention form beads and/or granules which may be used for ion removal, separation, and/or concentration.

As summarized above, the present invention is drawn to a novel composition of matter comprising polyamide-containing ligand molecules covalently bound to solid support materials to form the compounds of Formula 9. The present invention is also drawn to novel compositions of matter comprising polyamide ligand-containing polymeric resins as described in Formula 14. However, by utilizing these compositions, the present invention is also drawn to methods for the preferential removal, separation, and/or concentration of certain desired metal ions, such as certain transition, post-transition, and alkaline earth metal ions from solution. The solution from which the desired ions may be removed may contain other metal ions or hydrogen ions present at greater concentrations than the desired ions. For example, Cd²⁺, Pb²⁺, and Ag⁺ may be removed from acidic and or highly chelative matrices and Ni²⁺, Co²⁺, Fe³⁺, Cu²⁺, Sr²⁺, and Ca²⁺ may be removed from slightly acidic to neutral pH matrices and from chelating matrices. Moreover, the above described polyamide-containing ligand molecules covalently bound to solid supports and polyamide ligand-containing polymeric resins provide means for separating ppb to ppm levels of Cd²⁺ and Pb²⁺ from concentrated acid solution by using separation techniques and equipment generally known in the art. Moreover the above described structures such as those described in Formula 9 and Formula 14 provide a means for separating ppb to ppm levels of Cd²⁺ and Pb²⁺ from concentrated acid solution by using the separation techniques and equipment generally known in the art.

The method for separating and recovering desired ions is accomplished by forming a complex of the desired ions with a polyamide-containing ligand which is bonded to a solid support or which is in the form of a polymeric resin. Specifically, this is accomplished by flowing a source solution containing the desired ion(s) through a column packed with either of the polyamide-containing ligand structures in order to complex or chelate the desired metal ion(s) to the polyamide ligand portion of either composition, i.e., as in Formula 9 or Formula 14. Subsequently, the desired cation which is bound to the polyamide-containing ligand is released by flowing a complex-breaking receiving liquid in much smaller volume than the volume of source solution originally passed through the column. This removes and concentrates the desired ions in the receiving liquid solution by either (a) forming a stronger complex with the desired transition, post-transition or alkaline earth metal ion(s) than does the polyamide-containing ligand, or (b) temporarily forming a stronger interaction with the polyamide-containing ligand than does the desired metal ion(s), and thus, the desired metal ion(s) are quantitatively stripped from the polyamide-containing ligand structure in concentrated form in the receiving solution. The recovery of a desired metal ion(s) from the receiving liquid is accomplished by evaporation, electrowinning, precipitation, or by other known methods.

The following examples should not be considered as limitations of the present invention, but are merely intended to teach how to make the best known polyamide-containing solid supports based upon current experimental data.

### EXAMPLES

### EXAMPLES 1 - 4d: SYNTHESIS OF POLYAMIDE-CONTAINING LIGATING AGENTS BONDED TO SOLID SUPPORTS

Examples 1 - 4D demonstrate representative structures of solid supports bonded to polyamide-containing ligands. All of these examples have several characteristics in common including: 1) each have 3 or more amide groups capable of complexing or chelating desired ions; 2) each have 2 or more amine nitrogens separated by at least 2 carbons; and 3) each has at least one solid support linkage.

### Example 1 - Synthesis of dioxatetraamide [ethylene bis(oxyethylenenitrilo)tetraaceticacid (EGTAM)] attached to a silica support

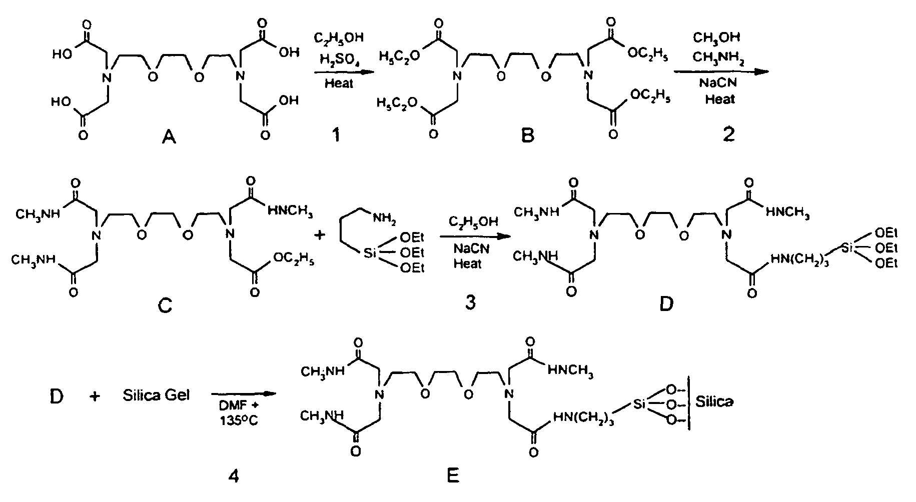

Step 1 - About 39.2 g of ethylene glycol-bis(β-aminoethyl ether)-N,N,N',N'-tetraacetic acid (A) (0.1 mole), 1.5L of ethanol, and 15 mL of sulfuric acid were added to a 2 L three-neck round bottom flask. The flask was equipped with a Soxhlet extraction apparatus containing 1:1 magnesium sulfate and sodium sulfate as a drying reagent. The mixture was refluxed and the drying reagent replaced every 12 hours. After refluxing 1-2 days, the system became homogeneous. It was then refluxed for another 8 hours. Next, the system was cooled to room temperature and the ethanol was removed by evaporation. About 10% sodium carbonate aqueous solution was added to adjust the pH of the system to about 8. The resulting solution was extracted 3 times with chloroform. The organic layer was separated and dried by adding magnesium sulfate. The chloroform was then removed under reduced pressure to concentrate the product. The residue was purified by chromatography (silica gel, ethyl acetate) to afford 34.8 g (68.5%) of ethylene glycol-bis(β-aminoethyl ether)-N,N.N',N'-tetraacetic acid ethyl ester (B) as a colorless liquid. Characterization was done by NMR under the following conditions: ¹H NMR (300 MHz, deuteriochloroform) δ 4.2 (q,8 H), 3.6 (t, 12 H), 3.5 (s, 4 H), 1.2 (t.12 H); FABMS 493 (M⁺).

Step 2 - About 69.6 g of the tetraester (B) above, (0.14 mole), 212 mL of 2.0 M methylamine solution in methanol, and 2.08 g of sodium cyanide as a catalyst were added to a 250 mL sealed glass reactor. The mixture was refluxed for 2 days. Methanol was removed by evaporation. The residue was dissolved in 1 L of chloroform, and washed with 200 mL of water to remove the water soluble tetraacetate. The chloroform layer was separated and dried by adding magnesium sulfate. About 27.0 g of the triacetamide (C) was obtained. Characterization was done by NMR under the following conditions: ¹H NMR (300 MHz, deuteriochloroform) δ 7.4 (d, 3 H), 3.5-3.2 (m, 14 H), 3.0 (s 3 H), 2.6-2.4 (m,11 H); IR 1725 cm⁻¹ (carbonyl group of ester), 1660 cm⁻¹ (carbonyl group of amide); FABMAS 457(M⁺Na⁺).

Step 3 - About 27.0 g (0.06 mole) of the triacetamide (C), 66.0 g (0.3 mole) of triethoxysilyl propyl amine, 20 mL of ethanol and a catalytic amount of sodium cyanide were added to a 250 mL sealed glass reactor. The mixture was refluxed for 2 days. The IR spectra of the reaction mixture showed that the signal (1773 cm-1) from the carbonyl group of the ester disappeared and only the signal (1660 cm-1) from the carbonyl group of the amide remained. The solvent was removed by a rotary evaporator. The excess triethoxysilyl propyl amine was then removed by evaporation in a vacuum chamber, 70°C/l mm Hg. About 54.0 g of ethylene glycol-bis(β-aminoethyl ether)-N,N,N'-[tris(N-methylacetamide)],N'-triethoxysilanepropylaminocarbonylmethylene (D) was obtained.

Step 4 - About 54.0 g of ethylene glycol-bis(β-aminoethyl ether)-N,N,N'-[tris(N-methylacetamide)],N'-triethoxysilanepropylaminocarbonylmethylene (D), 54.0 g of silica gel, and 500 mL of N,N-dimethyl formamide were added to a 1 L-three neck round bottom flask. The flask was equipped, with a mechanical stirrer, a condenser and a thermometer. The temperature of the mixture was maintained at 135°C. After stirring for 2 days, the reaction mixture was filtered. The resulting tetraamide ligand functionalized silica gel (E) was washed with methanol several times then dried in a vacuum oven at 50-60°C for 6 hours. About 71.0 g of product E was obtained.

### Example 2 - Synthesis of diaza-18-crown-6-tetraamide attached to a silica solid support

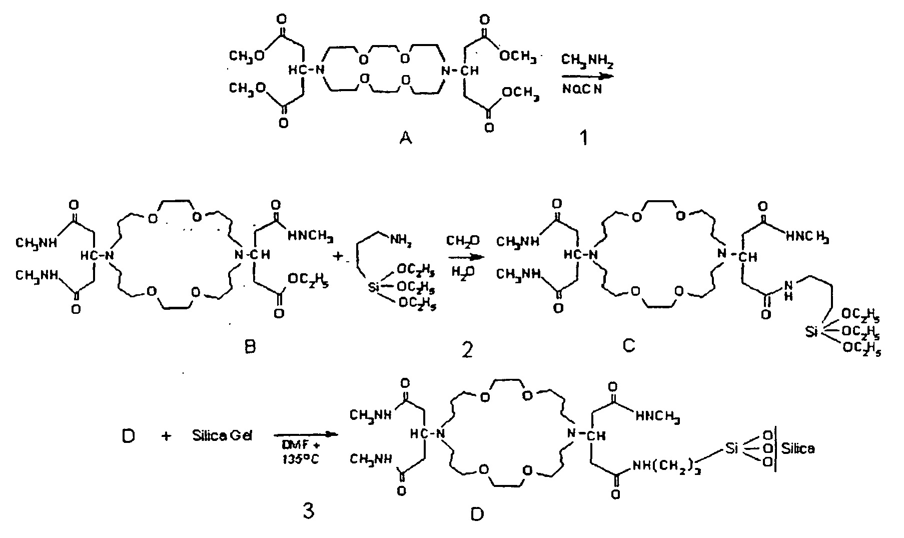

Tetraester of diaza-18-crown-6 prepared as published: de Jong et. al., J. Chem. Soc., 102 (1983), pg. 164.

Step 1 - About 2.61 g of the 7,16-bis(dicarboxymethyl)-1,4,10,13-tetraoxa-7,16-diazacyclooctadecane tetramethyl ester (A), 18 ml of 1.0 M methylamine solution in methanol and 0.1 g of sodium cyanide as a catalyst was added to a 25 ml sealed glass reactor. The mixture was refluxed for 2 days. Methanol was removed by evaporation. The residue was dissolved in 0.1 L of chloroform and washed with 20 mL of water. The chloroform layer was separated and dried by adding magnesium sulfate. About 2.2 g of product B was obtained.

Step 2 - About 2 g of the triacetamide (B) from Step 1, 2.7 g (0.015 mole) of triethoxysilyl propyl amine, 20 mL of ethanol, and a catalytic amount of sodium cyanide were added to a 25 mL sealed glass reactor. The mixture was refluxed for 2 days. The IR spectra of the reaction mixture showed that the signal (1773 cm⁻¹) from carbonyl group of ester disappeared and only the signal (1660 cm⁻¹) from the carbonyl group of amide remained. The solvent was then removed by a rotary evaporator and the excess triethoxysilyl propyl amine was then removed by evaporation in a vacuum chamber (70°C/l mm Hg). About 2.1 g of C was obtained.

Step 3 - About 2.2 g of the product (C) from Step 2, 5.0 g of silica gel, and 50 mL of N,N-dimethyl formamide were added to a 1 L-three neck round bottom flask. The flask was equipped with a mechanical stirrer, a condenser and a thermometer. The temperature of the mixture was maintained at 135°C. After stirring for 2 days, the reaction mixture was filtered. The resulting tetraamide ligand functionalized silica gel was washed with methanol several times then dried in a vacuum oven at 50-60°C for 6 hours. About 5.2 g of the product was obtained (D).

### Example 3 - Synthesis of ethylenediaminetetraacetamide-n-methy,lenepropanetetraamine (EDTAAMT) attached to a silica support

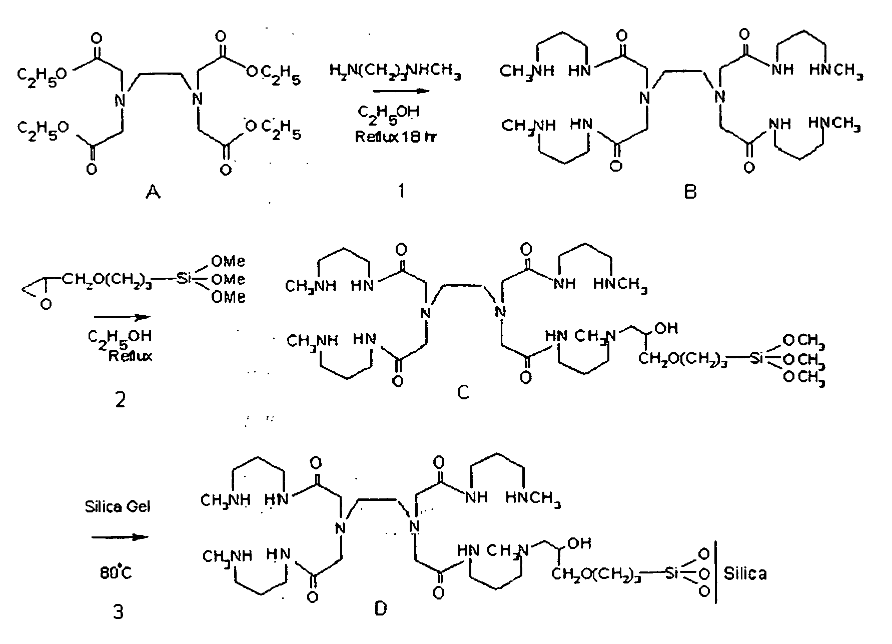

Step 1 - About 10 g (75 mMole) of the tetraethyl acetate of ethylenediaminetetraacetic acid (ethyl-EDTA) (A) was dissolved in 200 mL of ethyl alcohol with 88g (1 mole) of N-methyl-1,3-propanediamine and refluxed for 18 hours forming compound B above. The ethyl alcohol and excess diamine was evaporated under vacuum. Additional trace of diamine was evaporated under high vacuum.

Step 2 - To the above compound (B) 5.9 g (25mmole) of 3-glycidoxypropyltrimethoxysilane and 100mL of ethyl alcohol were added. The mixture was refluxed for 3 hours forming compound C above.

Step 3 - About 48 g of silica gel was added and the mixture (C) and was stirred at 78°C overnight. The product was filtered, washed with ethyl alcohol and dried in a vacuum oven forming a tetraamide ligand functionalized silica gel (D).

### Example 4A - Synthesis of phenyl substituted tris(2-aminoethyl)amine pentaamide (TRENPAM) attached to a polystyrene solid support

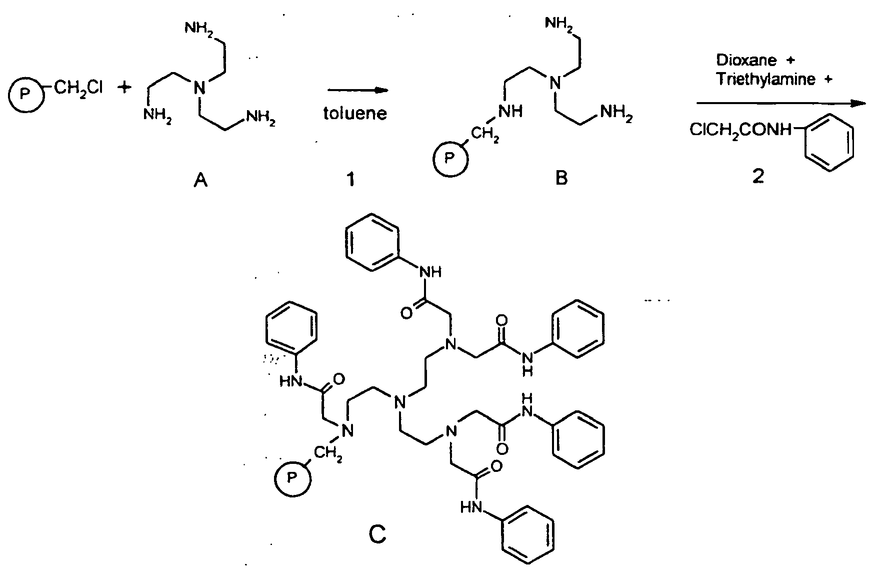

Step 1 - About 2 g of chloromethyl polystyrene, 2% DVB (Merrifield resin) was mixed with 10 g of tris(2-aminoethyl)amine (TREN), and 15 mL of toluene. The reaction mixture was kept at 80°C overnight. The resulting functionalized polystyrene solid support (B) was filtered and washed in order with methanol, water, methanol, and then dried under vacuum at 50°C.

Step 2 - About 2 g of the derivative of polystyrene functionalized with trisamine (B), was mixed with 3 g of N-phenylchloroacetamide in 25 mL of dioxane and 3 mL of triethylamine. The reaction mixture was mixed overnight at 80°C. The resulting pentaamide ligand functionalized polystyrene support (C) was removed by filtration, washed with dioxane and methanol and dried under the vacuum at 50°C. The product yield was about 2 g.

### Example 4B - Synthesis of dimethyl substituted tris(2-aminoethyl)amine pentaamide (TRENPAM) attached to a polystyrene solid support

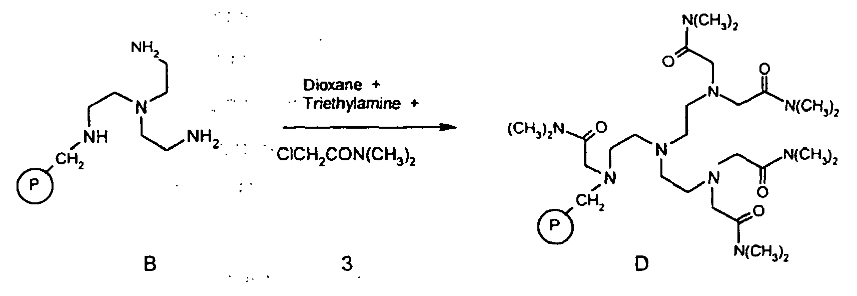

Step 3 - The dimethyl analog of C above (D) was prepared using the same procedures as above with the substitution of 3 g of N,N-dimethylchloroacetamide in place of N-phenylchloroacetamide in Example 5a, Step 2.

### Example 4C - Synthesis of phenyl substituted tris(2-aminoethyl)amine pentaamide (TRENPAM) attached to a silica support

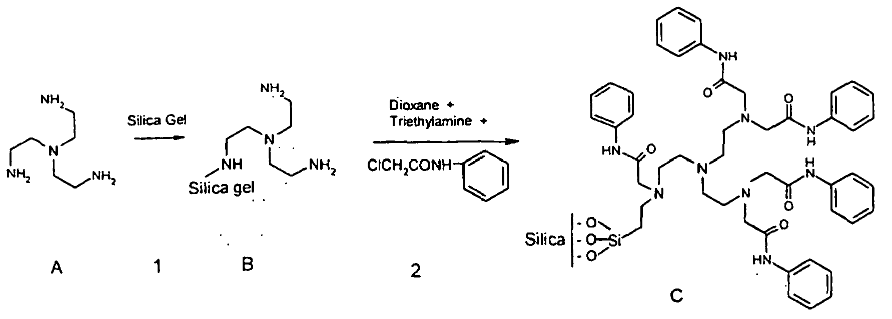

Step 1 - Tris(2-aminoethyl)amine was attached to silica gel using techniques described in U.S. Patent 4,952,321.

Step 2 - About 2 g of the tris(2-aminoethyl)amine functionalized silica gel (B) was added to 25 mL of 1,4-dioxane solution containing 3 g of N-phenylchloroacetamide and 1.8 g of triethylamine. The reaction mixture was mixed overnight at 80°C. The resulting pentaamide ligand functionalized silica gel (C) was filtered and washed with 1,4-dioxane and methanol and dried under vacuum at 50°C. The product yield was about 2.3 g.

### Example 4D - Synthesis of dimethyl substituted tris(1-aminoethyl)amine pentaamide (TRENPAM) attached to a silica support

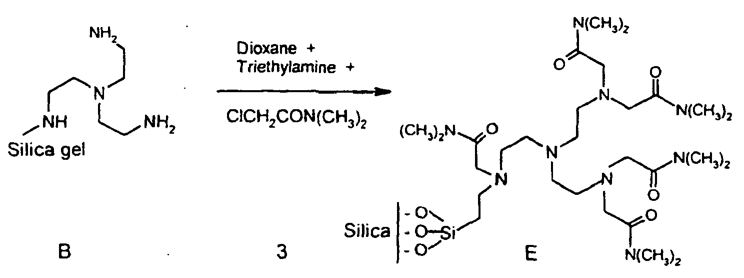

Step 3 - Functionalized silica gel (E) was prepared using the same procedure as Example 5C, Step 2, above with the substitution of 3 g of N,N-dimethylchloroacetamide for N-phenylchloroacetamide.

### EXAMPLES 5 - 8: CONCENTRATION OF DESIRED IONS WITH POLYAMIDE-CONTAINING LIGATING AGENTS BONDED TO SOLID SUPPORTS

The following examples demonstrate how the polyamide-containing ligating agents of Formula 9 may be used to remove and concentrate desired ions.

### Example5- Separation using EGTAM attached to silica support

About 0.05 g of the EGTAM attached to silica as shown in Example 1 was placed in a column. A 25°C, 10mL source solution consisting of 1M KCl, 20 ppm Cu(II), 20 ppm Pb(II) and 0.05 ppm Cd(II) in H₂O was drawn through the column. A 5mL aqueous solution of 0.2 M glycine and 0.4 M potassium citrate at 25°C was then passed through the column to wash out the loading solution remaining in the column. The Cd(II) was then eluted with 5 mL of 25°C, 0.7 M glycine. Analysis of the above solutions by Atomic Absorption Spectroscopy (AA) showed that greater than 98% of the Cd(II) originally in the source solution described above was in the receiving solution. Furthermore, the Cu, Fe, and Pb levels in the receiving liquid were less than 1 ppm.

### Example 6 - Separations using EGTAM attached to solid support

About 1.0 g of the EGTAM attached to silica as shown in Example 1 was placed in a column. At 25°C, a 3 mL source solution of 3204 ppm Cd(II) and 65 g/L Zn in pH 2 water plus H₂SO₄ was drawn through the column. A 4 mL aqueous solution of 0.01 M H₂SO₄ at 25°C was then passed through the column to wash out the loading solution remaining in the column. The Cd(II) was then eluted with 1 mL of 25°C, 1M H₂SO₄. Analysis of the above solutions by Inductively Coupled Plasma Spectroscopy (ICP) showed that 25% of the Cd(II) from the feed was in the receiving solution for a cadmium level of 2400 ppm and the Zn level in the receiving solution was only 40 ppm.

### Example 7 - Separations using EDTAM attached to silica solid support

In this example 0.1 g of the EDTAM attached to silica gel as shown in Example 4B was placed in a column. A 25°C, 10 mL source solution of 65 ppm Cu in 0.01 M HCl was drawn through the column. The Cu was then eluted with 5 mL of 25°C, 1 M H₂SO₄. Analysis of the above solutions by Inductively Coupled Plasma Spectroscopy (ICP) showed that greater than 95% of the Cu originally in the 10 mL solution described above was in the 5 mL receiving solution. Furthermore, a full loading curve experiment with 100 mL of the same source solution resulted in a subsequent removal of 0.02 mMole Cu²⁺ from the receiving solution.

### Example 8 - Separations using tris amine amide attached to polystyrene solid support

About 0.1 g of the tris amine amide as shown in Example 4B was placed in a column. A 25°C, 1 mL source solution of 290 ppm Pb(II) and 100 g/L Ag(I) in 0.1 M HNO₃ was drawn through the column. A 2 mL aqueous solution at 25°C was then passed through the column to wash out the loading solution remaining in the column. The Pb(II) was then eluted with 2 mL of 25°C, 5 M HNO₃. Analysis of the above solutions by Atomic Adsorption Spectroscopy (AA) showed that greater than 98% of the Pb(II) originally in the 1 mL solution described above was in the 2 mL receiving solution. Furthermore, the Ag(I) level in the receiving liquid was less than 1 ppm.

### EXAMPLES 9 AND 10: SYNTHESIS OF POLYAMIDE-CONTAINING POLYMERIC RESINS

### Example 9 - Synthesis of ethylenediaminetetraacetamide (EDTAM) and polymerization forming a polymeric resin

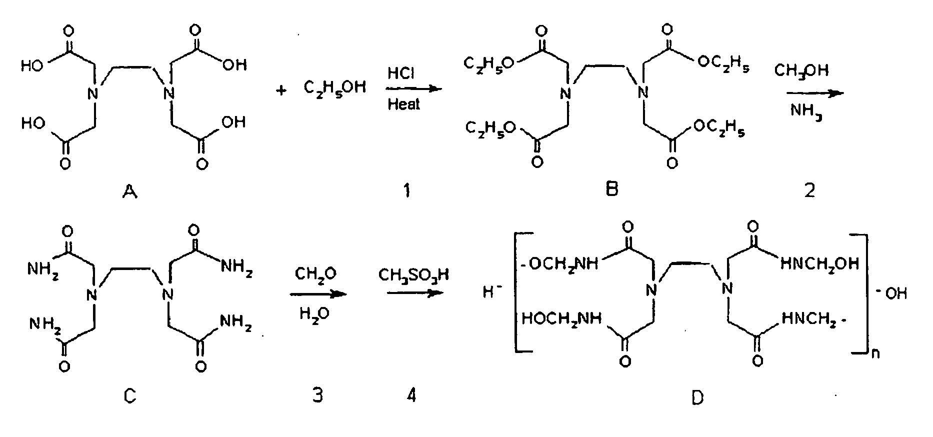

Step 1 - About 140 g (0.48 mole) of ethylenediaminetetraacetic acid (EDTA) (A) and 600 mL of ethyl alcohol were placed in a flask equipped with a Soxhlet extraction apparatus and refluxed while HCI gas was continuously bubbled through the system. After the mixture became homogeneous, it was refluxed for another 5 hours. The ethanol was then removed by evaporation. A 10% sodium carbonate aqueous solution was added to adjust the pH of the solution to about 8. The solution was then extracted with diethyl ether. The diethyl ether organic layer was separated, dried by adding sodium sulfate and concentrated under reduced pressure. About 153g (79% of theoretical) of the tetraester (B) was obtained after purification by column chromatography (silica, ethyl acetate). Purity was determined by NMR giving the following values: ¹H NMR (300 MHz, DCCl₃, [deuteriochloroform]) δ 4.2 (q,8H), 3.6 (s,8H), 2.9 (s4H), 1.3 (t,12H); FABMS 404(M⁺).

Step 2 - About 10 g (25mmole) of tetraester (B) was dissolved in 30 mL of methyl alcohol and combined with 200 mL of 7N ammonia solution in methyl alcohol. The mixture was stirred for 5 days at room temperature. A white precipitate formed that was filtered and washed with methyl alcohol. The precipitate was then dried in a vacuum oven. About 5 g of EDTAA (C) was formed.

Step 3 - About 5 g of EDTAA (C), was dissolved in 100 mL of water and combined with a solution containing 2 g of paraformaldehyde in 8mL of water. The system was stirred at room temperature for 3 hours. The water was then evaporated and the hydroxymethylated tetraacetamide residue was dried under a vacuum using phosphorous pentaoxide.

Step 4 - About 2 g of the hydroxymethylated tetraacetamide obtained in Step 3 was treated with 10 mL of methanesulfonic acid at room temperature for 2 hours. A polymeric mass (D) was formed which was filtered, washed with water and dried under a vacuum at 50°C using phosphorous pentaoxide. About 2 g of the EDTAM polymeric resin (D) was obtained.

The EDTAM polymeric resin structure (D) illustrates an essentially linear polymeric resin. However, this structure may be further polymerized or crosslinked using additional amounts of the polymerization agent, an additional polymerization agent, or a crosslinking agent. The structure of such a crosslinked resin structure would be difficult to ascertain as it would depend on the crosslinking agent, the number of amide groups entering into the crosslinking reaction, the degree of polymerization, and other variables known by those skilled in the art.

### Example 10 - Synthesis of diethylenetriaminepentaacetamide (DTPAM) and polymerization forming a crosslinked polymeric resin

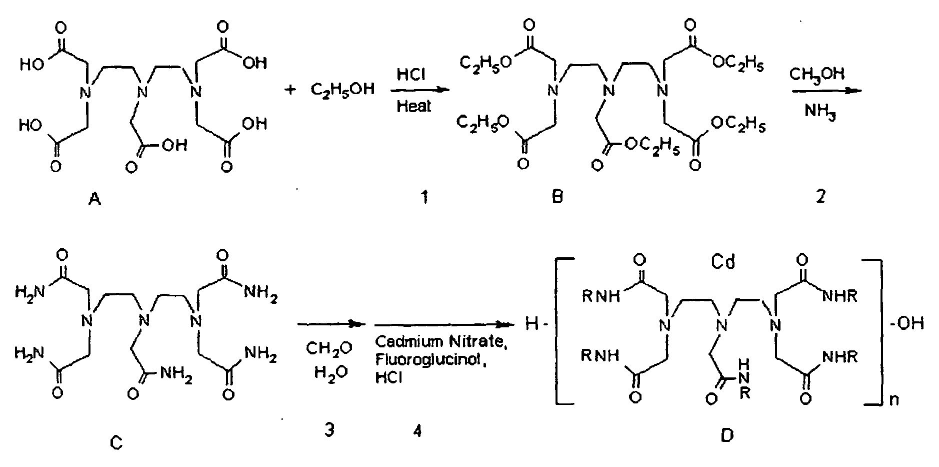

Step 1 - About 189 g (0.48 moles) of tris(2-aminoethyl)pentaacetic acid (A) and 1000 mL of ethyl alcohol were placed in a flask equipped with a Soxhlet extraction apparatus and refluxed while HCl gas was continuously bubbled through the system. After the mixture became homogeneous, it was refluxed for another 7 hours. The ethanol was then removed by evaporation. A 10% sodium carbonate aqueous solution was added to adjust the pH of the solution to about 8. The solution was then extracted with diethyl ether. The diethyl ether organic layer was separated, dried by adding sodium sulfate and concentrated under reduced pressure. About 192 g (75% of theoretical) of the pentaester (B), was obtained after purification by column chromatography (silica, ethyl acetate). Purity was determined by NMR giving the following values: ¹H NMR (300 MHz, DCCl₃, [deuteriochloroform]) δ 4.2 (q,10H), 3.6 (mm,10H), 3.2 (m,4H), 3.0 (m,4H), 1.3 (t,15H), FABMS 537(M⁺).

Step 2 - About 13 g (25mmole) of the pentaester (B) was dissolved in 40 mL of methyl alcohol and combined with 200 mL of 7 N ammonia solution in methyl alcohol. The mixture was stirred for 6 days at room temperature. A white precipitate formed that was filtered and washed with methyl alcohol. The precipitate was then dried in a vacuum oven. About 6 g of DTPAA (C) was formed.

Step 3 - The hydroxymethylated pentaacetamide derivative of DTPAA was prepared by dissolving DTPAA (C) in water and combining with an aqueous solution of paraformaldehyde. The system was stirred for 3 hours at room temperature.

Step 4 - About 3 g (5.7mmole) of cadmium nitrate tetrahydrate was dissolved in 50 mL of water and added to the hydroxymethylated compound solution of Step 3. A cadmium complex was allowed to form by stirring the complex for 20 minutes at room temperature. The complex was used as a template for polymerization. About 1.5 g of fluoroglucinol in 20 mL of ethyl alcohol and 2 mL of concentrated hydrochloric acid were added to the solution. The solution was kept at a temperature of 60°C for 3 hours then stirred at room temperature overnight. A polymeric resin (D) formed which was filtered, washed with water then methanol and dried under a vacuum at 50°C using phosphorous pentaoxide. About 4.1 g of the DTPAM polymeric resin (D) was obtained.

In the present example, paraformaldehyde is used to prepare the hydroxymethylated pentaacetamide derivative of DTPAA. If used in excess, the paraformaldehyde may initiate some polymerization. However, in the present example, the bulk of the polymerization and/or crosslinking is a result of the addition of the fluoroglucinol. Therefore, in Formula D of this example, R may represents either a hydrpxymethyl group, i.e., CH₂OH, a resulting group from any polymerization that occurs, or the following crosslinking agent which is a derived from fluoroglucinol: 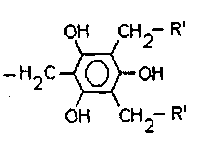
where R' is either an -OH group or another polyamide ligand unit on the polymer itself, i.e., crosslinking. If both of the R' variables are -OH, then there is no crosslinking. Therefore, it is preferably that at least one R' group is involved in crosslinking, i.e., not an -OH group. Further, at least one of the R groups of Formula D must be involved in the polymerization or crosslinking, preferably from two to five.

### EXAMPLE 11: CONCENTRATION OF DESIRED IONS WITH POLYAMIDE-CONTAINING POLYMERIC RESINS

The following example demonstrates how the polyamide-containing polymeric resins of Formula 14 may be used to remove and concentrate desired ions

### Example 11 - Separations using DTPAM polymeric resins

In this example, 0.1 g of the DTPAM polymer of Example 10 was placed in a packed column. A 75 mL source solution containing 2 ppm (parts per million) of Sr²⁺ in 0.05 M KCl, 0.1 M sodium acetate, and 0.01 M acetic acid was passed through the column. About 2 mL of water was then passed through the column to wash out the remaining loading solution. Next, the Sr²⁺ was eluted with 1 mL of 0.5 M H₂SO₄. Analysis of the above solutions by Atomic Adsorption Spectroscopy (AA) showed that greater than 99% of the Sr²⁺ originally present in the source solution described above was separated into the 1 mL receiving solution. Furthermore, the K⁺ and Na⁺ levels in the receiving liquid were less than 1 ppm.

Although the invention has been described and illustrated with reference to certain specific embodiments falling within the scope of Formula 14. other embodiments may be practiced. For example, other analogs of these polyamide-containing ligating compounds and methods of using the same are also within the scope of the invention. The invention is therefore limited only in scope by the following claims and functional equivalents thereof.

## Claims

1. A composition for selectively binding metal ions comprising a polyamide-containing ligand covalently bonded to a particulate solid support through a hydrophilic spacer having the formula:
S S-A-X-L
wherein SS is a particulate solid support, A is a covalent linkage mechanism. X is a hydrophilic spacer grouping, and L is polyamide-containing ligand with the proviso that when 55 is a particulate organic polymer. A-X may be combined as a single covalent linkage.

2. A composition according to claim 1 wherein said polyamide-containing ligand has three or more amide groups and two or more amine nitrogens separated by at least two carbons.

3. A composition according to claims 2 wherein said polyamide-containing ligand is selected from the group consisting of ethylene bis(oxyethylenenitrilo)tetraacetie acid (EGTAM), diaza-18-crown-6-tetraamide, ethylenediaminetetramide-N-melhylenepropanetetraamine (EDTAAMT), tris(2-aminoethyl)amine pentaamide (TRENPAM), and diethylenetriaminepentaacetamide (DTPAM).

4. A composition according to Claims 1, 2, or 3 wherein SS is a inorganic solid support selected from the group consisting of sand, silica gel, glass, glass fibers, alumina, zirconia, titania, and nickel oxide and combinations thereof.

5. A composition according to Claims 1, 2, or 3 wherein A is a member selected from the group consisting of Si(Z,Z)-O, wherein Z can independently represent members selected from the group consisting of Cl. Br, I, lower alkyl, lower alkoxy, substituted lower alkyl or substituted lower alkoxy and O-SS.

6. A composition according to Claims 1, 2, or 3 wherein X is a member represented by the formula:
(CH₂)ₐ(OCH₂CHR¹CH₂)_{b}
wherein R¹ is a member selected from the group consisting of H, SH, OH, lower alkyl, and aryl; a is an integer from 2 to about 10; and b is 0 or 1.

7. A composition according to Claim 6 wherein the -CH₂- group of said spacer (X) which is most distal to said solid support (SS) is covalently bonded to an amide group of said ligand (L) wherein said amide group is represented by the formula:
-(NH)ₘ(CH₂)ₙC(O)(NH)ₙ(CH₂)ₘ
where m is 0 or 1; and n is 0 or 1 with the proviso that when m is l, n is 0 and when m is 0, n is 1.

8. A composition according to Claim 6 wherein the -CH₂- group of said spacer (X) which is most distal to said solid support (SS) is covalently bonded to an amine nitrogen.

9. A composition according to Claims 1, 2, or 3 wherein SS is a particulate polymeric organic solid support matrix selected from the group consisting of polyacrylate, polystyrene, and polyphenol and combinations thereof.

10. A composition according to Claim 9 wherein A and X combined are represented by the formula:
-(CH₂)ₓ-(Y)_{y}-(CH₂)_{z}-
where y is an integer of 0 or 1; x and z are independently integers between 0 and 10; and Y is member selected from the group consisting of O, S, C=N, CO, CONH, CSNH, COO, CSO, NH. NR, SO, SO₂, SO₂NH, C₆H₄ and CH₂C₆H₄ where R is lower alkyl with the proviso that at least one of x, y and z must be at least 1.

11. A method for concentrating, removing, or separating selected ions from a source solution comprising the steps of:
(a) contacting said source solution having a first volume with a composition comprising a polyamide-containing ligand covalently bonded to a particulate solid support through a hydrophilic spacer having the formula:
SS-A-X-L
where SS is a particulate solid support, A is a covalent linkage mechanism, X is a hydrophilic spacer grouping, L is a polyamide-containing ligand with the proviso that when SS is a particulate organic polymer, A-X may be combined as a single covalent linkage, and wherein said L portion of the composition has an affinity for said selected ions such as to form a complex between said selected ions and said L portion of said composition;
(b) removing the source solution from contact with said composition to which said selected ions have been complexed; and
(c) contacting said composition having said selected ions complexed thereto with a smaller volume of an aqueous receiving solution in which said selected ions are either soluble or which has greater affinity for such selected ions than does the ligand portion of the composition thereby quantitatively stripping such selected ions from the ligand and recovering said selected ions in concentrated form in said receiving solution.

12. A method according to Claim 11 wherein said selected ion is a member selected from the group consisting of transition, post-transition, and alkaline earth metal ions.

13. A method according to Claim 12 wherein said selected ions are transition metal ions selected from the group consisting of Cd²⁺, Ag⁺, Ni²⁺, Co²⁺, Fe³⁺, Cu²⁺, and combinations thereof.

14. A method according to Claim 12 wherein said post-transition metal ion is Pb²⁺.

15. A method according to Claim 12 wherein said selected ions are alkaline earth metal ions selected from the group consisting of Ca²⁺, Sr²⁺, and combinations thereof.

16. A method according to claim 12 wherein said polyamide-containing ligand has three or more amide groups and two or more amine nitrogens separated by at least two carbons.

## Revendications

1. Une composition pour fixer sélectivement des ions métalliques, comprenant un ligand, contenant un polyamide, lié de manière covalente à un support solide particulaire par l'intermédiaire d'un écarteur hydrophile, de formule:
**SS-A-X-L**
dans laquelle SS est un support solide particulaire, A est un mécanisme de liaison covalente, X est un groupement écarteur hydrophile, et L est un ligand contenant un polymère, avec la condition que, lorsque SS est un polymère organique particulaire, A-X peut être combiné sous la forme d'une seule liaison covalente.

2. Une composition selon la revendication 1, dans laquelle ledit ligand contenant un polyamide comprend au moins trois groupes amide et au moins deux atomes d'azote d'amine séparés par au moins deux atomes de carbone.

3. Une composition selon la revendication 2, dans laquelle ledit ligand contenant un polyamide est choisi dans le groupe constitué par l'acide éthylènebis-(oxyéthylènenitrilo)-tétraacétique (EGTAM), le diaza-1,8-couronne-6-tétramide, l'éthylènediaminetétraacétamido-N-méthylènepropanetétramine (EDTAAMT), le tris(2-aminoéthyl)-aminopentamide (TRENPAM) et le diéthylènetriaminopentacétamide (DTPAM).

4. Une composition selon la revendication 1, 2 ou 3, dans laquelle SS est un support solide inorganique choisi dans le groupe constitué par le sable, le gel de silice, le verre, les fibres de verre, l'alumine, la zircone, l'oxyde de titane et l'oxyde de nickel, ainsi que leurs combinaisons.

5. Une composition selon la revendication 1, 2 ou 3, dans laquelle A est un élément choisi dans le groupe constitué par **Si(Z,Z)-O** où Z peut indépendamment représenter des éléments choisis dans le groupe constitué par Cl, Br, I, alkyle inférieur, alcoxy inférieur, alkyle inférieur substitué ou alcoxy inférieur substitué et O-SS.

6. Une composition selon la revendication 1, 2 ou 3, dans laquelle X est un élément représenté par la formule:
**(CH**_{**2**}**)**_{**a**}**(OCH**_{**2**}**CHR**^{**1**}**CH**_{**2**}**)**_{**b**}
dans laquelle R' est un élément choisi dans le groupe constitué par H, SH, OH, alkyle inférieur et aryle; a est un entier de 2 à environ 10; et b est égal à 0 ou 1.

7. Une composition selon la revendication 6, dans laquelle le groupe - CH₂- dudit écarteur (X) qui est le plus distal par rapport audit support solide (SS) est lié de manière covalente à un groupe amide dudit ligand (L), où ledit groupe amide est représenté par la fommle:
**-(NH)**_{**m**}**(CH**_{**2**}**)**_{**n**}**C(O)(NH)**_{**n**}**(CH**_{**2**}**)**_{**m**}
dans laquelle m est égal à 0 ou 1; et n est égal à 0 ou 1,
à la condition que, lorsque m est égal à 1 alors n est égal à 0, et que lorsque m est égal à 0 alors n est égal à 1.

8. Une composition selon la revendication 6, dans laquelle le groupe - CH₂- dudit écarteur (X) qui est le plus distal par rapport audit support solide (SS) est lié de manière covalente à un atome d'azote d'amine.

9. Une composition selon la revendication 1, 2 ou 3, dans laquelle SS est une matrice de support solide organique polymère particulaire choisie dans le groupe constitué par le polyacrylate, le polystyrène et le polyphénol, ainsi que leurs combinaisons.

10. Une composition selon la revendication 9, dans laquelle A. et X combinés sont représentés par la formule:
- **(CH**_{**2**}**)**_{**x**}**-(Y)**_{**y**}**-(CH**_{**2**}**)**_{**z**}**-**
dans laquelle y est égal à 0 ou 1; x et z sont indépendamment des nombres entiers compris entre 0 et 10; et Y est un élément choisi dans le groupe constitué par O, S, C=N, CO, CONH, CSNH, COO, CSO, NH, NR, SO, SO₂, SO₂NH, C₆H₄ et CH₂C₆H₄ où R est un alkyle inférieur, à la condition qu'au moins l'un de x, y et z soit au moins égal à 1.

11. Procédé pour concentrer, éliminer ou séparer des ions sélectionnés depuis une solution source, comprenant les étapes consistant à:
(a) mettre en contact ladite solution source ayant un premier volume avec une composition comprenant un ligand contenant un polyamide lié de manière covalente à un support solide particulaire par l'intermédiaire d'un écarteur hydrophile de formule:
**SS-A-X-L**
dans laquelle SS est un support solide particulaire, A est un mécanisme de liaison covalente, X est un groupement écarteur hydrophile, et L est un ligand contenant un polymère, avec la condition que, lorsque SS est un polymère organique particulaire, A-X peut être combiné pour former une seule liaison covalente, et où ladite partie L de la composition a une affinité pour lesdits ions sélectionnés de façon à former un complexe entre lesdits ions sélectionnés et ladite partie L de ladite composition;
(b) enlever la solution source du contact avec ladite composition à laquelle lesdits ions sélectionnés ont été complexés; et
(c) mettre en contact ladite composition à laquelle lesdits ions sélectionnés sont complexés avec un plus petit volume d'une solution de réception aqueuse dans laquelle lesdits ions sélectionnés sont solubles ou qui présente une plus forte affinité pour ces ions sélectionnés que la partie de ligand de la composition, de façon à extraire ainsi quantitativement ces ions sélectionnés du ligand et à récupérer lesdits ions sélectionnés sous forme concentrée dans ladite solution de réception.

12. Procédé selon la revendication 11, dans laquelle ledit ion sélectionné est un élément choisi dans le groupe constitué par les ions de métaux de transition, de post-transition et alcalino-terreux.

13. Procédé selon la revendication 12, dans lequel lesdits ions sélectionnés sont des ions de métaux de transition choisis dans le groupe constitué par Cd²⁺, Ag⁺, Ni²⁺, Co²⁺, Fe³⁺, Cu²⁺, et leurs combinaisons.

14. Procédé selon la revendication 12, dans lequel ledit ion de métal de post-transition est Pb²⁺.

15. Procédé selon la revendication 12, dans lequel lesdits ions sélectionnés sont des ions de métaux alcalino-terreux choisis dans le groupe constitué par Ca²⁺, Sr²⁺ et leurs combinaisons.

16. Procédé selon la revendication 12, dans lequel ledit ligand contenant un polyamide comprend au moins trois groupes amide et au moins deux atomes d'azote d'amine séparés par au moins deux atomes de carbone.

## Patentansprüche

1. Zusammensetzung zum selektiven Binden von Metallionen, umfassend einen Polyamid enthaltenden und covalent an einen gekörnten Feststoffträger gebundenen Ligand, über einen hydrophilen Spacer mit der Formel:
SS-A-X-L
wobei SS ein gekörnter Feststoffträger, A ein covalenter Bindungsmechanismus, X eine hydrophile Spacer-Gruppierung und L ein Polyamid enthaltender Ligand ist, unter der Bedingung, dass A-X als eine einfache covalente Bindung kombiniert werden kann, wenn SS ein gekörntes organisches Polymer ist.

2. Zusammensetzung nach Anspruch 1, wobei der Polyamid enthaltende Ligand drei oder mehr Amidgruppen und zwei oder mehr Aminstickstoffatome umfasst, die durch zwei oder mehr Kohlenstoffatome getrennt sind.

3. Zusammensetzung nach Anspruch 2, wobei der Polyamid enthaltende Ligand aus der Gruppe ausgewählt ist, die aus Ethylen-bis(oxyethylennitrilo)tetraessigsäure (EGTAM), Diaza-18-krone-6-tetraamid, Ethylendiamintetraacetamid-N-methylenpropantetraamin (EDTAAMT), Tris(2-aminoethyl)aminpentaamid (TRENPAM) und Diethylentriaminpentaacetamid (DTPAM) besteht.

4. Zusammensetzung nach Anspruch 1, 2 oder 3, wobei SS ein anorganischer Feststoffträger ist, der aus der Gruppe ausgewählt ist, die aus Sand, Kieselgel, Glas, Glasfasern, Aluminiumoxid, Zirkondioxid, Titandioxid und Nickeloxid und aus deren Kombinationen besteht.

5. Zusammensetzung nach Anspruch 1, 2 oder 3, wobei A ein Element ist, das aus der Gruppe ausgewählt ist, die aus Si(Z,Z)-O besteht, wobei Z unabhängig Elemente darstellen kann, die aus der Gruppe ausgewählt sind, die aus Cl, Br, I, niedermolekularem Alkyl, niedermolekularem Alkoxy, substituiertem niedermolekularem Alkyl oder substituiertem niedermolekularem Alkoxy und O-SS besteht.

6. Zusammensetzung nach Anspruch 1, 2 oder 3, wobei X ein Element ist, das durch die Formel
(CH₂)ₐ(OCH₂CHR¹CH₂)_{b}
dargestellt ist, wobei R¹ ein Element ist, das aus der Gruppe ausgewählt ist, die aus H, SH, OH, niedermolekularem Alkyl und Aryl besteht, wobei a eine ganze Zahl von 2 bis ungefähr 10 und b 0 oder 1 sind.

7. Zusammensetzung nach Anspruch 6, wobei die -CH₂-Gruppe des Spacers (X), der von dem Feststoffträger (SS) am weitesten entfernt ist, covalent an eine Amidgruppe des Ligands (L) gebunden ist, wobei die Amidgruppe durch die Formel
-(NH)ₘ(CH₂)ₙC(O)(NH)ₙ(CH₂)m
dargestellt ist und wobei m 0 oder 1 ist und wobei n 0 oder 1 ist, unter der Bedingung, dass n 1 ist, wenn m 1 ist, n 0 ist und wenn m 0 ist.

8. Zusammensetzung nach Anspruch 6, wobei die -CH₂-Gruppe des Spacers (X), der von dem Feststoffträger (SS) am weitesten entfernt ist, covalent an einen Aminstickstoff gebunden ist.

9. Zusammensetzung nach Anspruch 1, 2 oder 3, wobei SS eine gekörnte polymerische organische Feststoffmatrix ist, die aus der Gruppe ausgewählt ist, die aus Polyacryl, Polystyrol und Polyphenol sowie aus deren Kombinationen besteht.

10. Zusammensetzung nach Anspruch 9, wobei A und X in Kombination durch die Formel
-(CH₂)ₓ-(Y)_{y}-(CH₂)_{z}-
dargestellt sind, wobei y eine ganze Zahl von 0 bis 1 ist; x und z unabhängig voneinander ganze Zahlen zwischen 0 und 10 sind; und y ein Element ist, das aus der Gruppe ausgewählt ist, die aus O, S, C=N, CO, CONH, CSNH, COO, CSO, NH, NR, SO, SO₂, SO₂NH, C₆H₄ und CH₂C₆H₄ besteht, wobei R ein niedrigmolekulares Alkyl ist, unter der Bedingung, dass wenigstens eine von x, y und z wenigstens 1 ist.

11. Verfahren zum Konzentrieren, Entfernen oder Abtrennen von ausgewählten lonen aus einer Ursprungslösung, umfassend die Schritte von:
(a) in Kontakt bringen der Ursprungslösung, die ein erstes Volumen hat, mit einer Zusammensetzung, die einen Polyamid enthaltenden, covalent an einen gekörnten Feststoffträger gebundenen Ligand enthält, über einen hydrophilen Spacer mit der Formel:
SS-A-X-L
wobei SS ein gekörnter Feststoffträger, A ein covalenter Bindungsmechanismus, X eine hydrophile Spacer-Gruppierung und L ein Polyamid enthaltender Ligand ist, unter der Bedingung, dass A-X als eine einfache covalente Bindung kombiniert werden kann, wenn SS ein gekörntes organisches Polymer ist, und wobei der L-Anteil der Zusammensetzung eine Affinität zu den ausgewählten lonen besitzt, so dass ein Komplex zwischen den ausgewählten lonen und dem L-Anteil der Zusammensetzung gebildet wird;
(b) Entfernen der Ursprungslösung aus dem Kontakt mit der Zusammensetzung, mit der die ausgewählten lonen eine Komplexverbindung eingegangen sind, und
(c) in Kontakt bringen der die ausgewählten lonen als Komplexverbindung enthaltenden Zusammensetzung mit einem kleineren Volumen einer wässrigen Aufnahmelösung, in der die ausgewählten lonen entweder löslich sind oder die eine größere Affinität zu diesen ausgewählten lonen hat als der Ligand-Anteil der Zusammensetzung, wodurch diese ausgewählten lonen quantitativ von dem Ligand entfernt werden, und Rückgewinnen der ausgewählten lonen in konzentrierter Form aus der Aufnahmelösung.

12. Verfahren nach Anspruch 11, wobei das ausgewählte lon ein Element ist, das aus der Gruppe ausgewählt ist, die aus Übergangs-, Post-Übergangs- und Erdalkali-Metallionen besteht.

13. Verfahren nach Anspruch 12, wobei die ausgewählten lonen Übergangsmetallionen sind, die aus der Gruppe ausgewählt sind, die aus Cd²⁺, Ag⁺, Ni²⁺, Co²⁺, Fe³⁺, Cu²⁺ und deren Kombinationen besteht.

14. Verfahren nach Anspruch 12, wobei das Post-Übergangsmetallion Pb²⁺ ist.

15. Verfahren nach Anspruch 12, wobei die ausgewählten lonen Erdalkalimetallionen sind, die aus der Gruppe ausgewählt sind, die aus Ca²⁺, Sr²⁺ und deren Kombinationen besteht.

16. Verfahren nach Anspruch 12, wobei der Polyamid enthaltende Ligand drei oder mehr Amidgruppen und zwei oder mehr Aminstickstoffatome enthält, die durch mindestens zwei Kohlenstoffatome getrennt sind.
